# EUROPÄISCHE PATENTSCHRIFT

(11) **EP 0 731 885 B1**
(45) Veröffentlichungstag und Bekanntmachung des Hinweises auf die Patenterteilung: **22.07.1998**
(21) Anmeldenummer: 95903334.1
(22) Anmeldetag: 10.12.1994
(51) Int. Cl.: F16H 63/22

(54) **SCHALTVORRICHTUNG**
GEAR SHIFT DEVICE
DISPOSITIF DE CHANGEMENT DE VITESSE

(30) Priorität: 16.12.1993 DE 4342957
(43) Veröffentlichungstag der Anmeldung: 18.09.1996
(73) Patentinhaber: ZF FRIEDRICHSHAFEN Aktiengesellschaft, 88038 Friedrichshafen (DE)
(72) Erfinder: GAZYAKAN, Ünal, D-88045 Friedrichshafen (DE)
(86) Internationale Anmeldenummer: EP9404107
(87) Internationale Veröffentlichungsnummer: WO9516869

(56) Entgegenhaltungen:
- WO-A-93/10377
- DE-C- 293 488
- US-A- 3 513 717
- PATENT ABSTRACTS OF JAPAN vol. 8, no. 33 (P-254) 14. Februar 1984 & JP,A,58 189 716 (MITSUBISHI JIDOSHA) 5. November 1983

## Beschreibung

Die Erfindung betrifft eine Schaltvorrichtung für die Schaltungsbetätigung von Mehrstufenschaltgetrieben nach dem Oberbegriff des Anspruches 1.

Bekannt sind Verriegelungseinrichtungen, die gabelförmige Schaltelemente gegeneinander verriegeln, um somit eine Fehlfunktion, also das versehentliche, gleichzeitige Einlegen zweier Gänge, zu verhindern, die unweigerlich eine Beschädigung oder gar Zerstörung des Getriebes nach sich ziehen würde.

Eine derartige Verriegelungseinrichtung für eine einzige Schaltstange, auf der mehrere Schaltschwingen angeordnet sind, ist in der DE 40 17 957 beschrieben. Als Verriegelungselemente sind dabei Kipphebel vorgesehen, die Bewegungen der Schaltschwingen verhindern, wenn sie über Sperrnocken in Verriegelungsnuten eingreifen, die auf jeder Schaltschwinge vorhanden sind.

In dieser Druckschrift ist jedoch nicht beschrieben, wie die jeweilige, zum Einlegen des gewünschten Ganges benötigte Schaltschwinge angesteuert bzw. ausgewählt wird, oder wie dieser Mechanismus genau funktioniert. Es ist lediglich erwähnt, daß die Schaltschwinge nach einer Dreh- und einer Axialbewegung der Schaltstange verschwenkt wird.

Die meisten bekannten Getriebe weisen zum Auswählen bzw. Ansteuern einer bestimmten Schaltschwinge oder Schaltgabel mehrere Schaltstangen auf. Eine derartige Anordnung hat aber den Nachteil, daß sie sehr viel Platz benötigt und die Montage aufwendig und somit teuer ist.

Die Merkmale des Oberbegriffes des Anspruches 1 sind in der US-A-3 513 717 gezeigt.

Der vorliegenden Erfindung liegt daher die Aufgabe zugrunde, eine Weiterbildung des Standes der Technik vorzusehen, die einfach, kostengünstig und sicher ist, insbesondere bei der nur eine einzige Schaltstange zur Gangschaltung erforderlich ist.

Erfindungsgemäß wird diese Aufgabe durch die im kennzeichnenden Teil von Anspruch 1 genannten Merkmale gelöst.

Durch die erfindungsgemäße Lösung läßt sich auf konstruktiv einfache Art und Weise eine Schaltvorrichtung realisieren, die keine Fehlbedienung oder Fehlfunktion zuläßt, platzsparend ist und sehr einfach und kostengünstig montiert und demontiert werden kann.

Vorteilhafte Weiterbildungen und Ausgestaltungen der Erfindung ergeben sich aus den Unteransprüchen 2 bis 10 und den nachfolgend anhand der Zeichnung beschriebenen Ausführungsbeispielen.
Es zeigt:
- Fig. 1: einen Schnitt durch ein Getriebegehäuse mit einer Schaltvorrichtung nach der Linie I-I von Fig. 2;
- Fig. 2: eine perspektivische Ansicht der Schaltvorrichtung nach der Fig. 1;
- Fig. 3: eine perspektivische Ansicht einer erfindungsgemäßen Schaltvorrichtung in einer Ausbildung mit Schaltgabeln;
- Fig. 4: eine perspektivische Ansicht der Schaltvorrichtung nach der Fig. 3 in einer Ausbildung mit Schaltschwingen;
- Fig. 5: eine perspektivische Ansicht eines Grundkörpers einer Koppeleinrichtung;
- Fig. 6: einen Längsschnitt durch den Grundkörper einer Koppeleinrichtung entlang der Linie II-II in der Fig. 5;
- Fig. 7: eine Schaltstange mit mehreren Mitnahmeteilen;
- Fig. 8: eine Ansicht des Grundkörpers der Koppeleinrichtung mit der Schaltstange;
- Fig. 9: einen Schnitt entlang der Linie IX-IX von Fig. 10 durch den Grundkörper der Koppeleinrichtung;
- Fig. 10 bis 12: einen Längsschnitt durch die Fixiereinrichtung, der schematisch das Anwählen einer Schaltgabel oder Schaltschwinge zeigt und
- Fig. 13: einen Schnitt durch den Grundkörper einer Koppeleinrichtung entlang der Linie III-III von Fig. 8.

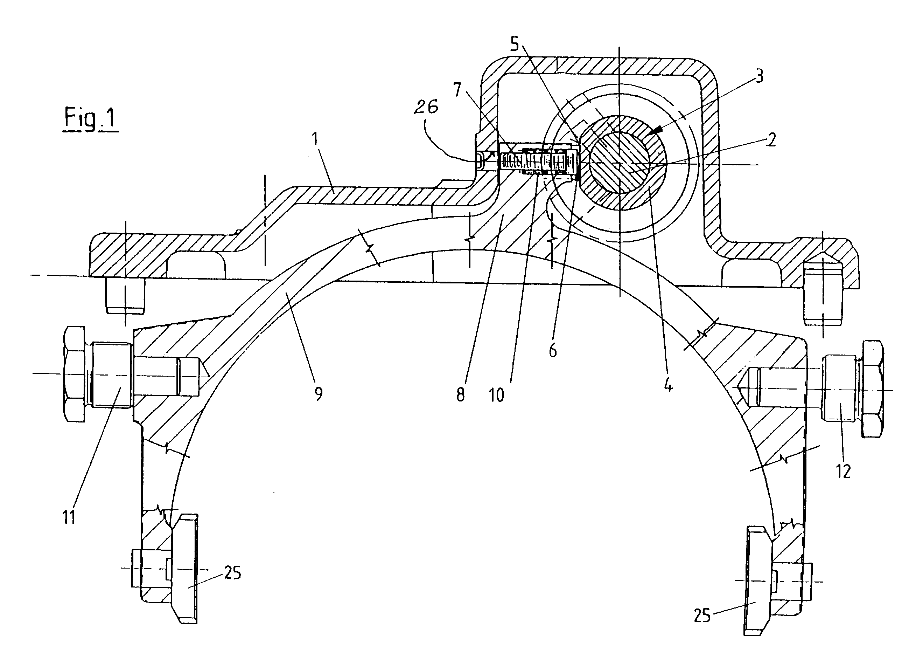

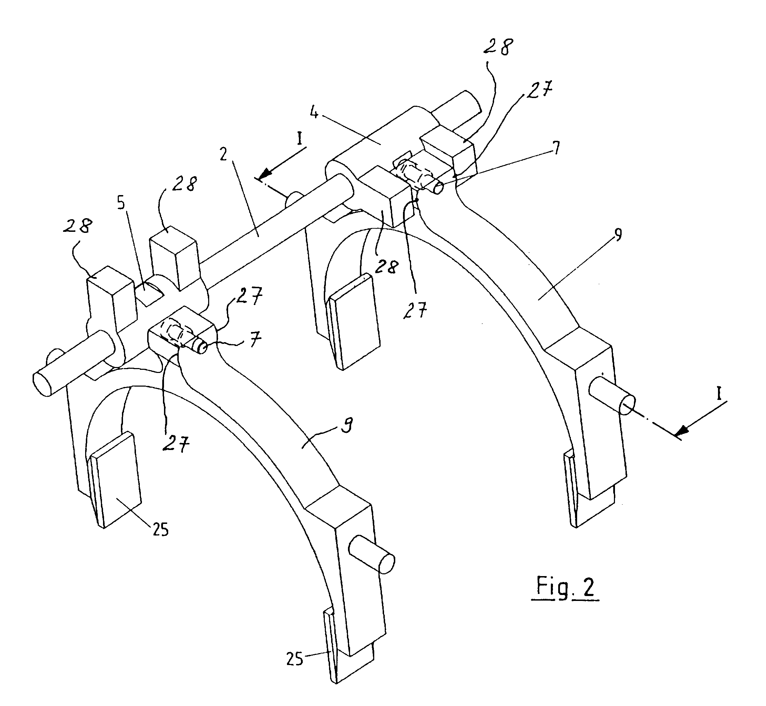

Die Fig. 1 und 2 zeigen eine dem Stand der Technik ähnliche Schaltvorrichtung, die nur für den Einsatz mit Schaltschwingen geeignet ist.

Bezug nehmend auf Fig. 1 ist ein Schnitt durch eine Schaltvorrichtung dargestellt.

In einem Getriebegehäuse 1 ist eine Schaltstange 2 drehbar und in Axialrichtung verschiebbar gelagert. Auf der Schaltstange 2 ist eine Koppeleinrichtung 3 fest angebracht, die einen hülsenförmigen Grundkörper 4 aufweist, in den eine senkrecht zur Längsachse des Grundkörpers 4 verlaufende Nut 5 eingearbeitet ist. Im oberen Teil 8 einer Schaltschwinge 9 ist ein Arretierbolzen 7 unter der Wirkung einer Vorspannfeder axial verschieblich gelagert. Die Vorspannfeder ist als Druckfeder 10 ausgebildet. In der gezeichneten Lage wird der Arretierbolzen 7 durch die Druckfeder 10 gegen die Oberfläche der Nut gedrückt. Die Schaltschwinge 9 ist gegenüber dem Getriebegehäuse 1 schwenkbeweglich. Hierzu ist die Schaltschwinge 9 um zwei Bolzen 11, 12 schwenkbar im Getriebegehäuse 1 gelagert.

Wird die Schaltstange 2 und damit der hülsenförmige Grundkörper 4 verdreht, wird der Arretierbolzen 7 durch die Oberfläche der Nut 5 nach links - bezogen auf die Zeichnung - gegen die Kraft der Druckfeder 10 verlagert. Diese axiale Verlagerung bewirkt ein Eintauchen des freien (linken) Endes des Arretierbolzens 7 in eine Bohrung 26 des Getriebegehäuses. Die axiale Verschiebebewegung endet, wenn der Arretierbolzen 7 am Umfang des hülsenförmigen Grundkörpers 4 anliegt. Das freie Ende des Arretierbolzens 7 ist dann vollständig in die Bohrung 26 eingetaucht. Der erläuterte Vorgang bewirkt eine Verriegelung der Schaltschwinge 9 am Getriebegehäuse 1.

Fig. 2 zeigt in perspektivischer Darstellung die bereits beschriebene Anordnung.

In dieser Darstellung sind besonders gut die in den Grundkörper 4 eingearbeitete Nut 5 sowie der anliegende Arretierbolzen 7 zu sehen. Auch die Anordnung mehrerer Schaltschwingen 9 auf einer einzigen Schaltstange 2 ist deutlich zu erkennen, ebenso wie die versetzt angeordneten Nuten 5, die sich jeweils nur über einen Teilumfangsbereich jedes Grundkörpers erstrecken, der einzelnen Grundkörper 4.

Dieser winklige Versatz, bei dem jeder der an sich gleichen Grundkörper 4 bezüglich der Nuten 5 um einen gestimmten Winkel versetzt auf der Schaltstange 2 angeordnet ist, bewirkt, daß immer nur eine bestimmte Schaltschwinge 9 ausgewählt und betätigt wird.

Das Anwählen einer bestimmten Schaltschwinge 9 mit der Schaltvorrichtung funktioniert wie folgt:

Durch Drehen der Schaltstange 2 um einen bestimmten Winkel, dessen Betrag davon abhängt, welcher Gang eingelegt, also welche Schaltschwinge 9 angesteuert werden soll, wird der Arretierbolzen 7 durch die vorgespannte Druckfeder 10 gegen die Oberfläche der Nut 5 des entsprechenden Grundkörpers gedrückt. Dies ist bei der in der Zeichnung rechts liegenden Schaltschwinge 9 der Fall. Der Arretierbolzen 7 hat die ihm zugeordnete Bohrung 26 des Getriebegehäuses 1 verlassen. Beim Verdrehen der Schaltstange 2 tauchen zwei ballig geformte Anlageflächen 27 im oberen Teil 8 der Schaltschwinge 9 zwischen zwei Mitnehmer 28 des Grundkörpers 4 ein. Die Anlageflächen 27 und die Mitnehmer 28 des Grundkörpers 4 bilden eine Mitnahmeeinrichtung 6, die durch die Nut 5 und den Arretierbolzen 7 vervollständigt wird.

Wird die Schaltstange 2 nun in axialer Richtung verschoben, so dreht sich auch die Schaltschwinge 9 um die durch die Bolzen 11, 12 festgelegte Drehachse und führt somit in bekannter Weise einen Gangwechsel über Gleitsteine 25 aus.

Soll ein anderer Gang eingelegt werden, so wird die Schaltstange 2 wieder um einen bestimmten Winkel gedreht. Der Arretierbolzen 7 wird durch die Oberfläche der Nut 5 gegen die Druckfeder 10 axial bewegt und taucht in die ihm zugeordnete Bohrung 26 im Getriebegehäuse 1 ein. Damit wird die Schaltschwinge 9 im Getriebegehäuse 1 arretiert. Bei diesem Vorgang verlassen die Mitnehmer 28 die Anlageflächen 27 der Schaltschwinge 9 und weisen, wie dies am Beispiel der linken Schaltschwinge in Fig. 2 ersichtlich ist, nach oben. Die Schaltschwinge 9 ist im Getriebegehäuse verriegelt und eine Axialbewegung der Schaltstange 2 ist ohne Einfluß auf diese Schaltschwinge. Bei einer anderen Schaltschwinge wird der dortige Arretierbolzen 7 gegen die Oberfläche der Nut 5 des hülsenförmigen Grundkörpers 4 gedrückt. Der Arretierbolzen 7 verläßt die Bohrung 26 des Getriebegehäuses 1. Bei diesem Vorgang tauchen die balligen Anlageflächen 27 in den Zwischenraum zwischen den Mitnehmern 28 ein.

Die Schaltstange 2 mit den fest darauf angebrachten Grundkörpern 4 kann entweder einstückig durch spanende Bearbeitung hergestellt werden, oder die Schaltstange 2 und der Grundkörper 4 werden getrennt gefertigt und anschließend durch ein geeignetes Fügeverfahren, wie Schweißen, Kleben oder Löten, miteinander verbunden.

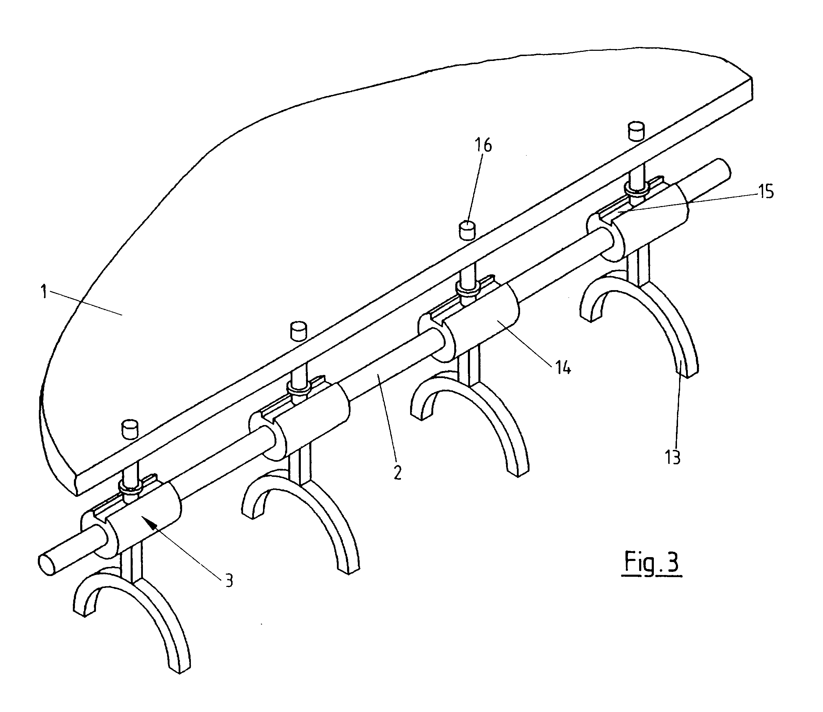

Ein Ausführungsbeispiel der erfindungsgemäßen Schaltvorrichtung, das sowohl mit Schaltgabeln als auch mit Schaltschwingen zusammenarbeiten kann, ist in den Fig. 3 bis 13 dargestellt. Für bereits beschriebene Bauteile mit der gleichen Funktion, wie bereits beschrieben, werden dieselben Bezugszeichen verwendet wie in den Fig. 1 und 2.

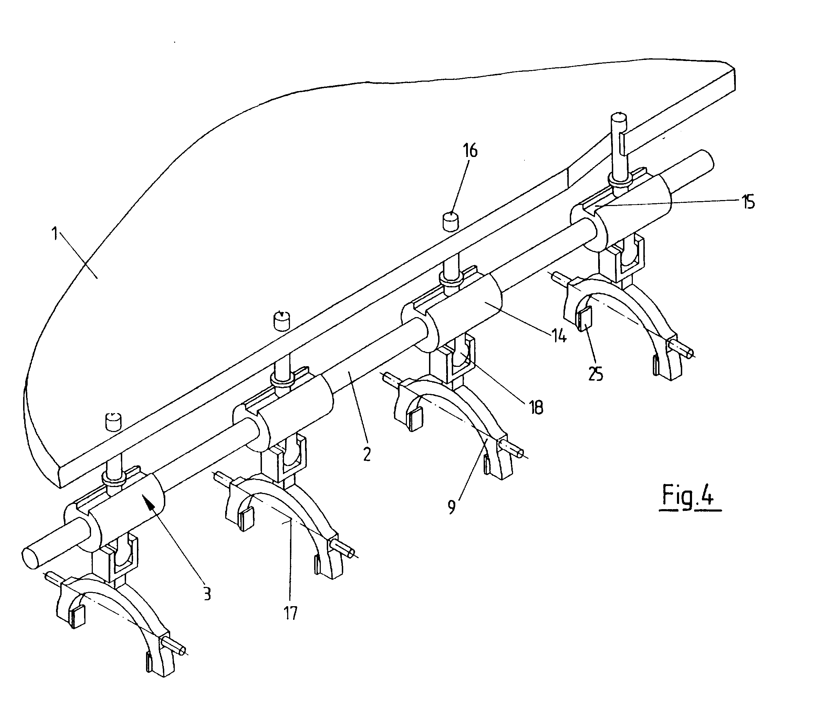

Bezug nehmend auf die Fig. 3 und 4 sind die möglichen Ausführungsformen mit Schaltgabeln (Fig. 3) und Schaltschwingen (Fig. 4) dargestellt.

Fig. 3 zeigt eine einzige Schaltstange 2, auf der mehrere Koppeleinrichtungen 3 angeordnet sind. Direkt unter den Koppeleinrichtungen 3 und fest mit diesen verbunden sind Schaltgabeln 13 angeordnet, die sich immer zusammen mit den Koppeleinrichtungen 3 bewegen.

Die Koppeleinrichtungen 3 weisen einen zylindrischen Grundkörper 14 mit einer obenliegenden Längsnut 15 auf. Die Koppeleinrichtung 3, d. h. der zylindrische Grundkörper 14, sitzt axial verschiebbar auf der Schaltstange 2. In die Längsnut 15 werden von Druckfedern 10 Rastbolzen 16 gedrückt.

Gemäß Fig. 4 können die Schaltschwingen 9 um eine Drehachse 17 drehen und den Gang in einem nicht dargestellten Getriebe wechseln, über ein Zwischengelenk 18 sind die Schaltschwingen 9 mit der jeweils zugehörigen Koppeleinrichtung 3 verbunden. Durch das Zwischengelenk 18 wird die Axialverschiebung der Schaltstange 2 bzw. des Grundkörpers 14 in eine Schwenkbewegung der Gleitsteine 25 der Schaltschwingen 9 umgewandelt.

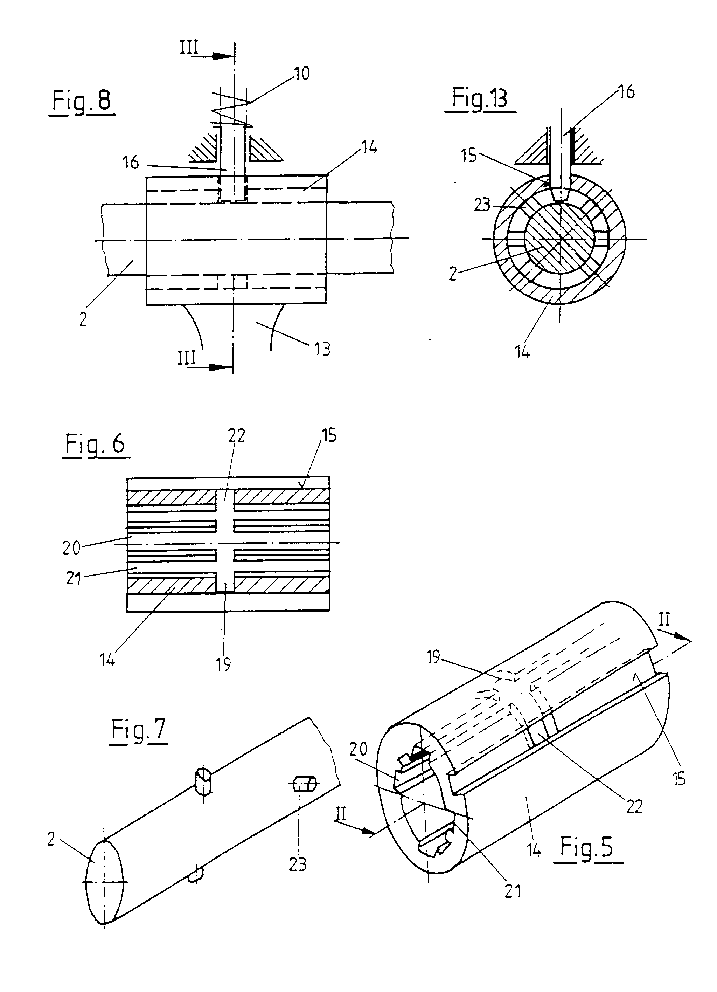

Fig. 5 zeigt den zylindrischen Grundkörper 14 in perspektivischer Ansicht in vergrößerter Einzeldarstellung.

Außer der Längsnut 15 weist der zylindrische Grundkörper 14 auf seiner Innenseite noch eine Ringnut 19 und mehrere Paare von axial verlaufenden Nuten auf, wobei ein Paar immer aus zwei sich gegenüberliegenden Nuten besteht. Ein Paar dieser Nuten ist durch die Bezugszeichen 20 und 21 gekennzeichnet. An einer Stelle der Längsnut 15 ist diese mit der Ringnut 19 durch einen Durchbruch 22 verbunden, der dadurch entsteht, daß sich die Ringnut 19 und die Längsnut 15 an dieser Stelle kreuzen und aufgrund der Abmaße der beiden Nuten der Durchbruch entsteht.

Fig. 6 zeigt einen Längsschnitt durch den zylindrischen Grundkörper 14, in dem noch einmal deutlich die Längsnut 15, die Ringnut 19, der Durchbruch 22 sowie jeweils eine Nut der paarweise axial verlaufenden Nuten dargestellt sind.

Fig. 7 zeigt in perspektivischer Darstellung die Schaltstange 2.

Auf der Schaltstange 2 sind Mitnahmeteile 23 angeordnet, die in dem erfindungsgemäßen Ausführungsbeispiel als Zapfen ausgebildet und z. B. jeweils um 45° versetzt auf der Umfangsfläche der Schaltstange 2 angeordnet sind. Sich gegenüberliegende Zapfen sind dabei so angeordnet, daß die Längsachsen der Zapfen koaxial sind. Diametral sich gegenüberliegende Zapfen können auch durch sich quer durch die Schaltstange 2 erstreckende Stifte ersetzt werden, wobei die Enden der Stifte jeweils aus der Schaltstange 2 herausragen. Die Abmessungen der Mitnahmeteile 23 sind dabei so bemessen, daß sie in den Paaren axial verlaufender Nuten 20, 21 und in der Ringnut 19 im zylindrischen Grundkörper 14 (siehe Fig. 5) geführt werden und parallel zur Längsachse der Schaltstange 2 bzw. um deren Längsachse verschiebbar bzw. drehbar sind.

Fig. 8 zeigt eine Seitenansicht des zylindrischen Grundkörpers 14 mit der daran angebrachten Schaltgabel 13 (nur teilweise dargestellt), der Schaltstange 2 und dem Rastbolzen 16, der aufgrund der vorgespannten Druckfeder 10 in die in dieser Ansicht nicht zu sehende Längsnut 15 auf der Oberseite des zylindrischen Grundkörpers 14 formschlüssig eingreift. Die Längsnut 15 und der Rastbolzen 16 sind dabei so bemessen, daß der Rastbolzen 16 in der Längsnut geführt ist.

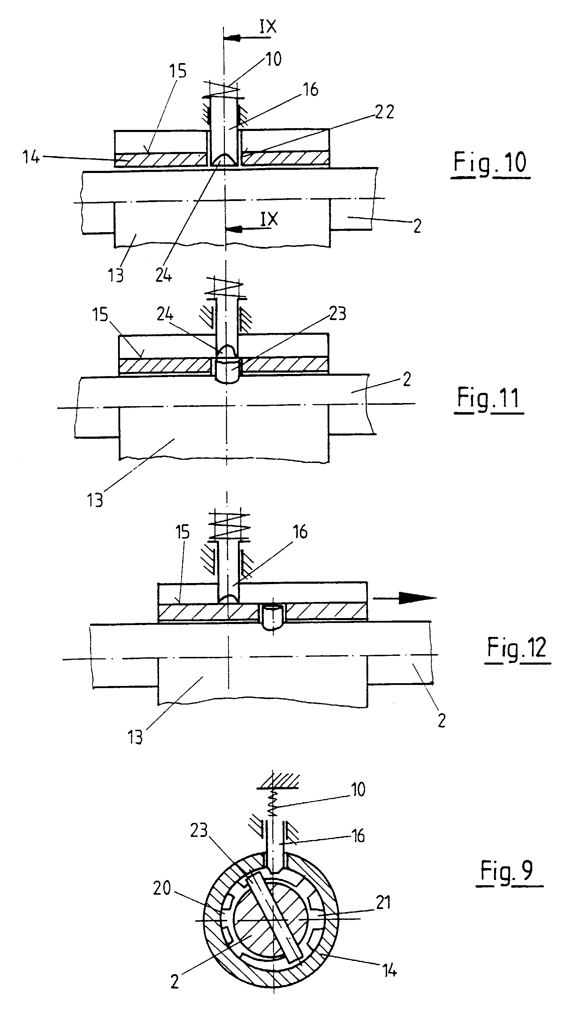

In Fig. 9 ist eine Zwischenposition der Schaltstange 2 der erfindungsgemäßen Schaltvorrichtung dargestellt. Der Rastbolzen 16 greift in die Längsnut 15 im zylindrischen Grundkörper 14 ein. Auch die paarweise axial verlaufenden Nuten 20, 21 sind deutlich zu erkennen. Die Mitnahmeteile 23 auf der Schaltstange 2 greifen in die paarweise axial verlaufenden Nuten 20, 21 ein.

Ein Gangwechsel ist in den Fig. 10 bis 12 dargestellt. In der Grundstellung (Fig. 10) sitzt der Rastbolzen 16 in der Längsnut 15 und dem Durchbruch 22, und die Mitnahmeteile (nicht dargestellt) der Schaltstange 2 befinden sich in der Ringnut (hier nicht zu sehen). Durch Drehen der Schaltstange 2 um einen definierten Winkel, der davon abhängt, welcher Gang eingelegt werden soll, drehen sich auch die an der Schaltstange 2 befestigten Mitnahmeteile 23, und je nach Winkelstellung wird an genau einem der sich auf der Schaltstange 2 befindlichen zylinderförmigen Grundkörper 14 der Rastbolzen 16 aus dem Durchbruch 22 so weit herausgehoben, daß er nur noch in der Längsnut 15 geführt ist (Fig. 11). Welcher der zylinderförmigen Grundkörper 14 ausgewählt wird, hängt davon ab, welcher Gang eingelegt werden soll.

Aufgrund des beschriebenen Vorganges liegt nun das Mitnahmeteil 23 nicht mehr vor einer Axialnut 20 oder 21, sondern in der Ringnut 19 an einer Nutwand an (siehe Fig. 9). Wird die Schaltstange 2 nun linear in axialer Richtung bewegt, bewegt sich der zylinderförmige Grundkörper 14 mit. Der Rastbolzen 16 des ausgewählten zylindrischen Grundkörpers 14 gleitet während des Vorganges des axialen Verschiebens in der Längsnut 15 (Fig. 12), während alle anderen auf der Schaltstange 2 angeordneten zylindrischen Grundkörper von ihren jeweiligen Rastbolzen festgehalten werden und die Schaltstange 2 unter ihnen hindurchgleitet, wobei die ihnen zugeordneten Mitnahmeteile 23 der Schaltstange 2 durch die Nuten 20 und 21 hindurchgleiten können.

Um den Schaltvorgang zu erleichtern, ist der Rastbolzen 16 auf seiner dem Mitnahmeteil 23 zugewandten Seite 24 mit einer Abschrägung oder Fase versehen, so daß er von dem Mitnahmeteil 23 während dessen Drehbewegung um die Längsachse der Schaltstange 2 leicht nach oben verschoben werden kann.

Soll nun ein anderer Gang eingelegt werden, so wird aus der zuletzt beschriebenen Stellung heraus die Schaltstange 2 und somit auch der zylindrische Grundkörper 14 mit der daran angebrachten Schaltgabel oder Schaltschwinge so weit axial verschoben, bis sich der Rastbolzen 16 wieder genau über der Ringnut 19, also auch genau über dem Durchbruch 22, befindet. Wird nun die Schaltstange 2 um einen definierten Winkel gedreht, so rastet der Rastbolzen 16 wieder in dem Durchbruch 22 ein, und der zylinderförmige Grundkörper 14 befindet sich wieder in seiner Grundstellung und ist gegenüber dem Gehäuse 1 arretiert, so daß die Schaltstange 2 bei einer Axialbewegung unter ihm durchgleiten kann, weil gleichzeitig auch das Mitnahmeteil 23 vor der Axialnut 20 oder 21 liegt.

Fig. 13 zeigt zur Verdeutlichung einen Schnitt entlang der Linie III-III von Fig. 8. Im oberen Bereich ist die Verbindung zwischen der Längsnut 15 und der Ringnut 19, also der Durchbruch 22, deutlich zu erkennen; ebenso die Schaltstange 2 mit den Mitnahmeteilen 23.

### Bezugszeichen

- 1: Getriebegehäuse
- 2: Schaltstange
- 3: Koppeleinrichtung
- 4: hülsenförmiger Grundkörper
- 5: Nut im Grundkörper
- 6: Mitnahmeeinrichtung
- 7: Arretierbolzen
- 8: oberer Teil der Schaltschwinge
- 9: Schaltschwinge
- 10: Druckfeder
- 11: Bolzen
- 12: Bolzen
- 13: Schaltgabel
- 14: zylindrischer Grundkörper
- 15: Längsnut
- 16: Rastbolzen
- 17: Drehachse
- 18: Zwischengelenk der Schaltschwinge
- 19: Ringnut
- 20: Paar axial verlaufender Nuten
- 21: Paar axial verlaufender Nuten
- 22: Durchbruch
- 23: Mitnahmeteil
- 24: Seite des Rastbolzens
- 25: Gleitsteine
- 26: Bohrung
- 27: Anlagefläche
- 28: Mitnehmer

## Patentansprüche

1. Schaltvorrichtung für die Schaltungsbetätigung von Mehrstufenschaltgetrieben von Kraftfahrzeugen mit wenigstens einer im wesentlichen parallel zur Räderachse axial verschiebbaren, in einem Getriebegehäuse (1) angeordneten Schaltstange (2), auf der Koppeleinrichtungen (3) angeordnet sind, die eine Verbindung zwischen der Schaltstange und Schaltgabeln (13) oder Schaltschwingen (9) herstellen, wobei die Schaltgabeln (13) bzw. Schaltschwingen (9) in Neutralstellung durch Fixiereinrichtungen relativ zu der Schaltstange (2) im Getriebegehäuse (1) fixiert sind und zur Gangschaltung eine entsprechend ausgewählte Koppeleinrichtung (3) über eine Mitnahmeeinrichtung (6) mit der Schaltstange (2) wenigstens axial fest verbindbar ist, dadurch **gekennnzeichnet**, daß die Fixiereinrichtung für jeweils eine Koppeleinrichtung (3) mindetens einen Rastbolzen (16) aufweist, der in dem Getriebegehäuse (1) gelagert ist und der in Neutralstellung in eine Umfangsnut der Koppeleinrichtung eingreift, wobei bei einer Winkeldrehung der Schaltstange (2) in Abhängigkeit von dem Verdrehwinkel ein mit der Schaltstange (2) verbundenes Mitnahmeteil (23) einen bestimmten Rastbolzen (16) aus der Umfangsnut verdrängt, wobei eine Mitnahmeeinrichtung für eine axiale Verbindung der ausgewählten Koppeleinrichtung (3) mit der Schaltstange (2) sorgt.

2. Schaltvorrichtung nach Anspruch 1, dadurch **gekennzeichnet**, daß die Koppeleinrichtung (3) und die Schaltschwinge (9) bzw. Schaltgabel (13) fest miteinander verbunden sind.

3. Schaltvorrichtung nach Anspruch 1, dadurch **gekennzeichnet,** daß das Mitnahmeteil (23) gleichzeitig auch die Mitnahmeeinrichtung darstellt.

4. Schaltvorrichtung nach Anspruch 3, dadurch **gekennzeichnet,** daß das Mitnahmeteil (23) bzw. die Mitnahmeeinrichtung als ein aus der Umfangswand der Schaltstange (2) herausragender Mitnahmestift ausgebildet ist.

5. Schaltvorrichtung nach Anspruch 4, dadurch **gekennzeichnet,** daß zur axialen Verbindung der Koppeleinrichtung (3) mit der Schaltstange (2) der Mitnahmestift (23) in einer in der Innenwand der Koppeleinrichtung eingebrachten, in Umfangsrichtung verlaufenden Nut (19) liegt.

6. Schaltvorrichtung nach einem der Ansprüche 1 bis 5, dadurch **gekennzeichnet**, daß der Rastbolzen (16) auf der dem Mitnahmeteil (23) zugewandten Seite (24) mit einer Fase versehen ist.

7. Schaltvorrichtung nach einem der Ansprüche 1 bis 6, dadurch **gekennzeichnet,** daß der Rastbolzen (16) durch eine Vorspannfeder (10) in Richtung auf die Koppeleinrichtung (3) vorgespannt ist.

8. Schaltvorrichtung nach einem der Ansprüche 3 bis 7, dadurch **gekennzeichnet**, daß zur axialen Verschiebbarkeit der Schaltstange (2) gegenüber den Koppeleinrichtungen (3) in den Koppeleinrichtungen eine der Anzahl der Mitnahmestifte (23) entsprechende Anzahl von Axialnuten (20, 21) angeordnet ist.

9. Schaltvorrichtung nach einem der Ansprüche 1 bis 8, dadurch **gekennzeichnet**, daß der Rastbolzen (16) zur radialen Führung der Koppeleinrichtung (3) beim Gangwechsel in einer Axialnut (15) der Koppeleinrichtung (3) aufgenommen ist.

10. Schaltvorrichtung nach einem der Ansprüche 4 bis 9, dadurch **gekennzeichnet**, daß bei einer Ausbildung mit Schaltschwingen (9) diese über ein Zwischengelenk (18) mit der jeweils dazugehörigen Koppeleinrichtung (3) verbunden ist.

## Claims

1. Gear shift device for the shift actuation of multispeed gearboxes of motor vehicles with at least one gear change rod (2), which is arranged in the gearbox (1), is movable in a substantially parallel direction to the wheel axis and on which coupling devices (3) are arranged, which produce a connection between the gear change rod and gear change forks (13) or gear change levers (9), the gear change forks (13) or gear change levers (9) being fixed in the neutral position relative to the gear change rod (2) in the gearbox housing (1) by retaining means and in order to shift gears a correspondingly selected coupling device (3) can be connected via a driving device (6) to the gear change rod (2) in a rigid manner at least in the axial direction, characterised in that, the retaining means comprises at least one locking bolt (16) for each coupling device (3), which locking bolt (16) is mounted in the gearbox housing (1) and in the neutral position engages in a circumferential groove in the coupling device, a driving element (23) connected to the gear change rod (2) forcing a particular locking bolt (16) out of the circumferential groove during an angle rotation of the gear shift rod (2) depending on the angle of rotation, a driving device providing an axial connection of the selected coupling device (3) with the gear change rod (2).

2. Gear shift device according to claim 1, characterised in that the coupling device (3) and the gear change lever (9) or gear change fork (13) are fixedly connected to one another.

3. Gear shift device according to claim 1, characterised in that the driving element (23) simultaneously acts as the driving device.

4. Gear shift device according to claim 3, characterised in that the driving element (23) or the driving device is constructed as a driving rod projecting out of the circumferential wall of the gear change rod (2).

5. Gear shift device according to claim 4, characterised in that, for the axial connection of the coupling device (3) with the gear change rod (2), the driving rod (23) lies in a groove (19) formed in the inner wall of the coupling device and extending in the circumferential direction.

6. Gear shift device according to one of claims 1 to 5, characterised in that the locking bolt (16) is provided on the side (24) facing the driving element (23) with a bevel.

7. Gear shift device according to one of claims 1 to 6, characterised in that the locking bolt (16) is prestressed by a compression spring (10) in the direction of the coupling device (3).

8. Gear shift device according to one of claims 3 to 7, characterised in that a number of axial grooves (20, 21) corresponding to the number of driving rods (23) is arranged in the coupling devices to allow for the axial displacement of the gear change rod (2) relative to the coupling devices (3).

9. Gear shift device according to one of claims 1 to 8, characterised in that the locking bolt (16) is accommodated in an axial groove (15) in the coupling device (3) to allow for the radial guidance of the coupling device (3) during a gear shift.

10. Gear shift device according to one of claims 4 to 9, characterised in that, in the case of a design with gear change levers (9), the latter is connected via an intermediate joint (18) to the respective associated coupling device (3).

## Revendications

1. Dispositif de commande pour l'actionnement de boîtes de vitesses à rapports multiples pour voitures automobiles avec au moins une tringle de changement de vitesse (2) axialement mobile en parallèle à l'essieu, montée dans un carter de boîte de vitesses (1), sur laquelle sont disposés des dispositifs de couplage (3) réalisant une jonction entre la tringle et des fourchettes (13) ou bielles (9), les fourchettes (13), respectivement les bielles (9), en position neutre, étant fixes par rapport à la tringle (2) dans le carter (1) grâce à des dispositifs de fixation et un dispositif de couplage (3) choisi par rapport au changement de vitesse pouvant être relié de manière fixe au moins dans le sens axial avec la tringle (2) grâce à un dispositif d'entraînement (6), **caractérisé** en ce que le dispositif de fixation présente, pour chaque dispositif de couplage (3), au moins un boulon d'arrêt (16) monté dans le carter de boîte de vitesses (1) et qui, en position neutre, s'engrène dans une rainure circonférentielle du dispositif de couplage, et lors d'une rotation angulaire de la tringle (2), un dispositif d'entraînement (23) relié à la tringle (2) déplace un boulon d'arrêt (16) donné en fonction de l'angle de rotation en le sortant de la rainure circonférentielle, un dispositif d'entraînement assurant alors une liaison axiale du dispositif de couplage (3) avec la tringle (2).

2. Dispositif de commande selon la revendication 1, **caractérisé** en ce que le dispositif de couplage (3) et la bielle (9), respectivement la fourchette (13) sont fermement reliés entre eux.

3. Dispositif de commande selon la revendication 1, **caractérisé** en ce que l'élément d'entraînement (23) représente également en même temps le dispositif d'entraînement .

4. Dispositif de commande selon la revendication 3, **caractérisé** en ce que l'élément d'entraînement (23), respectivement le dispositif d'entraînement, est formé par un ergot d'entraînement dépassant la paroi périphérique de la tringle (2).

5. Dispositif de commande selon la revendication 4, **caractérisé** en ce que pour la liaison axiale du dispositif de couplage (3) et de la tringle (2), l'ergot d'entraînement (23) est placé dans une rainure (19) agencée dans le sens circonférentiel dans la paroi intérieure du dispositif de couplage.

6. Dispositif de commande selon l'une des revendications 1 à 5, **caractérisé** en ce que le boulon d'arrêt (16) est pourvu d'un chanfrein à sa face (24) tournée vers l'élément d'entraînement (23).

7. Dispositif de commande selon l'une des revendications 1 à 6, **caractérisé** en ce que le boulon d'arrêt (16) est soumis à une pré-tension par un ressort (10) dans le sens du dispositif de couplage (3).

8. Dispositif de commande selon l'une des revendications 3 à 7, **caractérisé** en ce que pour la mobilité axiale de la tringle (2) par rapport au dispositif de couplage (3) un nombre de rainures axiales (20, 21) correspondant au nombre des ergots d'entraînement (23) sont agencées dans les dispositifs de couplage.

9. Dispositif de commande selon l'une des revendications 1 à 8, **caractérisé** en ce que le boulon d'arrêt (16), pour le guidage radial du dispositif de couplage (3) est inséré dans une rainure axiale (15) du dispositif de couplage (3) lors du changement de vitesse.

10. Dispositif de commande selon l'une des revendications 4 à 9, **caractérisé** en ce que pour la réalisation avec bielles (9), celle-ci est reliée au moyen d'une articulation intermédiaire (18) au le dispositif de couplage (3) correspondant.
